**Europäisches Patentamt**

**European Patent Office**

**Office européen des brevets**

(11) Veröffentlichungsnummer: **0 124 883**
**B1**

(12) **EUROPÄISCHE PATENTSCHRIFT**

(45) Veröffentlichungstag der Patentschrift:
10.12.86

(21) Anmeldenummer: **84104985.1**

(22) Anmeldetag: **03.05.84**

(51) Int. Cl.⁴: **G 01 N 1/28**

(54) Zentrifugationskammer mit lösbarer Trägerplatte.

(30) Priorität: **04.05.83 DE 3316336**

(43) Veröffentlichungstag der Anmeldung:
**14.11.84 Patentblatt 84/46**

(45) Bekanntmachung des Hinweises auf die Patenterteilung:
**10.12.86 Patentblatt 86/50**

(84) Benannte Vertragsstaaten:
**AT BE CH DE FR GB IT LI LU NL SE**

(56) Entgegenhaltungen:
**EP - A - 0 105 194**
**GB - A - 1 553 147**
**US - A - 3 937 581**
**US - A - 4 266 505**

(73) Patentinhaber: **Firma Andreas Hettich,**
**Gartenstrasse 100, D-7200 Tuttlingen (DE)**

(72) Erfinder: **Eberle, Günter, Gartenstrasse 100,**
**D-7200 Tuttlingen (DE)**

(74) Vertreter: **Riebling, Günter, Dr. et al, Patentanwälte**
**Dr.-Ing., Dipl.-Ing., Ing.(grad) Günter Riebling Dr.-Ing.,**
**Dipl.-Ing. Peter Riebling Rennerle 10 Postfach 3160,**
**D-8990 Lindau (Bodensee) (DE)**

**Beschreibung**

Die Erfindung betrifft eine Zentrifugationskammer zur Beschichtung von Objektträgern mit dem Sedimentationsprodukt einer Probenflüssigkeit während des Zentrifugiervorgangs, bestehend aus einem Oberteil mit einer oder mehreren darin angeordneten zylindrischen Probenkammern und einem abdichtend an der einen Stirnseite der Probenkammern anliegenden Objektträger, der auf einer planebenen Fläche einer Trägerplatte gelagert ist, die lösbar mit dem Oberteil verbunden ist.

Bei einer solchen auf den gleichen Anmelder zurückgehenden Zentrifugationskammer gemäss der nicht vorveröffentlichten, europäischen Patentanmeldung EP-A-0 105 194 [Stand der Technik nach Art 54(3) EPÜ] ist es relativ schwierig, den Objektträger von der Zentrifugationskammer zu lösen, weil jeweils an der Stirnseite der Trägerplatte jeweils eine Federklammer vorgesehen ist, die lösbar mit dem Oberteil verbindbar ist. Um das Oberteil von der Trägerplatte zu lösen, um beispielsweise den Objektträger zu entnehmen, ist es erforderlich, jeweils eine Federklammer mit der Hand zu erfassen und nach aussen zu ziehen, womit es dann nur schwer gelingt, in dem gleichen Arbeitsgang das Oberteil von der Trägerplatte abzunehmen.

Die Erfindung hat sich daher ausgehend von der eingangs genannten Problemstellung die Aufgabe gestellt, die Verbindung zwischen Oberteil einer Zentrifugationskammer und Trägerplatte schneller lösbar zu gestalten.

Zur Lösung der gestellten Aufgabe ist vorgesehen, dass die lösbare Verbindung zwischen dem Oberteil der Zentrifugationskammer und der den Objektträger haltenden Trägerplatte aus einem einhändig bedienbaren Verschlussschieber mit Verschlussausnehmungen besteht, der in Richtung seiner Längsachse verschiebbar oder drehbar in der Trägerplatte gelagert ist und der mit zugeordneten, in die Verschlussausnehmungen eingreifenden Verschlussteilen des Oberteils verbindbar ist.

Wesentliches Merkmal der Erfindung ist also, dass der erfindungsgemäss vorgesehene Verschlussschieber mit einer Hand bedienbar ist. Die Zentrifugationskammer wird hierbei zwischen die Finger einer Hand genommen, wobei beispielsweise der Daumen der einen Hand an der einen Seite der Zentrifugationskammer anliegt, während die übrigen Finger an der gegenüberliegenden Seite am Verschlussschieber anliegen. Der Verschlussschieber wird nun in seiner Längsrichtung verschoben oder gedreht, wobei wesentlich ist, dass dies mit den übrigen Fingern dieser Hand geschieht. Mit der gleichen Hand kann nach erfolgter Lösung des Verschlussschiebers das Oberteil von der Trägerplatte abgezogen werden, um beispielsweise den Objektträger auszuwechseln.

Eine einfache Ausführungsform eines in Längsrichtung verschiebbaren Verschlussschiebers sieht nach dem Gegenstand des Anspruches 2 vor, dass das Oberteil mit an der Bodenfläche ansetzenden, den Verschlussschieber mindestens teilweise mit abgewinkelten Hakenenden an der Unterseite untergreifenden Verschlusshaken verbunden ist, die im Öffnungszustand in die zugeordneten Verschlussausnehmungen in den Längskanten des Verschlussschiebers eingreifen und die im Schliesszustand den Verschlussschieber untergreifen.

Die an der Unterseite des Oberteils angebrachten Verschlusshaken sind stabil und gestatten gleichzeitig — aufgrund ihrer mehrfachen symmetrischen Anordnung — ein Aufstellen des von der Trägerplatte abgezogenen Oberteils auf einer Unterlage.

Eine weitere Ausführungsform nach dem Gegenstand des Anspruches 3 sieht vor, dass das Oberteil mit an der Bodenfläche ansetzenden, axialen Verschlussdornen verbunden ist, welche jeweils eine Ringnut verringerten Durchmessers aufweisen, der jeweils eine schlüssellochförmige Verschlussausnehmung im Verschlussschieber zugeordnet ist, dass im Öffnungszustand der Verschlussdorn in die Ausnehmung grösseren Durchmessers der Verschlussausnehmung und dass im Schliesszustand die Ringnut in die Ausnehmung kleineren Durchmessers der Verschlussausnehmung eingreift.

Diese Ausführungsform zeichnet sich durch die einfache Ausbildung der Verschlussdorne aus. Beiden vorgenannten Ausführungsbeispielen ist die einfache konstruktive Gestaltung des Verschlussschiebers gemeinsam.

In einer weiteren Ausführungsform nach dem Gegenstand des Anspruches 4 ist es vorgesehen, dass statt der Verschlussschiebung des Verschlussschiebers ein drehbar gelagerter Verschlussschieber mit exzentrischem Aussenumfang vorgesehen ist, der mit seinen am Aussenumfang angeordneten Verschlussausnehmungen mit zugeordneten Teilen des Oberteils der Zentrifugationskammer verriegelbar ist.

Statt der in Längsrichtung gerichteten Verschiebung des Verschlussschiebers kann demzufolge auch eine Drehung eines drehbar gelagerten Verschlussschiebers vorgesehen sein. Auch diese Ausführungsform hat sämtliche Vorteile der vorgenannten Ausführungsformen inne, d.h. es ist eine einhändige Bedienung bei geringem Konstruktions- und Montageaufwand möglich.

Bei allen Verschlussschiebern wird es bevorzugt, wenn diese im offenen Zustand (d.h. wenn das Oberteil in Offenstellung des Verschlussschiebers auf der Trägerplatte lagert) weit über die Aussenabmessungen der Trägerplatte hinaus reichen, so dass hierdurch verhindert wird, dass die gesamte Zentrifugationskammer bei geöffnetem Verschlussschieber in die entsprechende Kammer einer Zentrifuge eingesetzt wird, und etwa in Offenstellung zentrifugiert würde, was zum Auslaufen des Probeninhalts führen würde.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1 die Draufsicht in Richtung des Pfeiles I auf eine Zentrifugationskammer in einer ersten Ausführungsform nach Fig. 2;

Fig. 2 Mittenlängsschnitt durch die Zentrifugationskammer nach Fig. 1;

Fig. 3 Stirnansicht der Zentrifugationskammer in Pfeilrichtung III in Fig. 2;

Fig. 4 und 5 ein abgewandeltes Ausführungsbeispiel in bezug auf das Oberteil bei gleicher Trägerplatte mit gleichem Verschlussschieber;

Fig. 6 Draufsicht auf die Trägerplatte einer Zentrifugationskammer nach Fig. 1 bis 3;

Fig. 7 Seitenansicht der Trägerplatte mit teilweisem Schnitt durch den Verschlussschieber;

Fig. 8 Stirnansicht in Richtung des Pfeiles III in Fig. 6 auf die Trägerplatte;

Fig. 8a Draufsicht auf den Verschlussschieber;

Fig. 9 Draufsicht auf die Bodenfläche der Trägerplatte in Richtung des Pfeiles IX in Fig. 11 in verriegeltem Zustand;

Fig. 10 Draufsicht auf die Bodenfläche der Trägerplatte in unverriegeltem Zustand;

Fig. 11 Schnitt gemäss der Linie XI-XI in Fig. 9;

Fig. 12 Schnitt gemäss der Linie XII-XII in Fig. 10;

Fig. 13 Schnitt durch eine Zentrifugationskammer in einer zweiten Ausführungsform in unverriegeltem Zustand;

Fig. 14 Schnitt gemäss der Linie XIV-XIV in Fig. 16 durch die Zentrifugationskammer in verriegeltem Zustand;

Fig. 15 Draufsicht auf die Verschlussausnehmung im Verschlussschieber;

Fig. 16 Stirnansicht der Zentrifugationskammer nach Fig. 13 und 14;

Fig. 17 Unteransicht der Trägerplatte;

Fig. 18 Seitenansicht der Trägerplatte;

Fig. 19 Stirnansicht der Trägerplatte;

Fig. 20 schematisiert gezeichnetes, weiteres Ausführungsbeispiel, welches einen drehbar gelagerten Verschlussschieber zeigt.

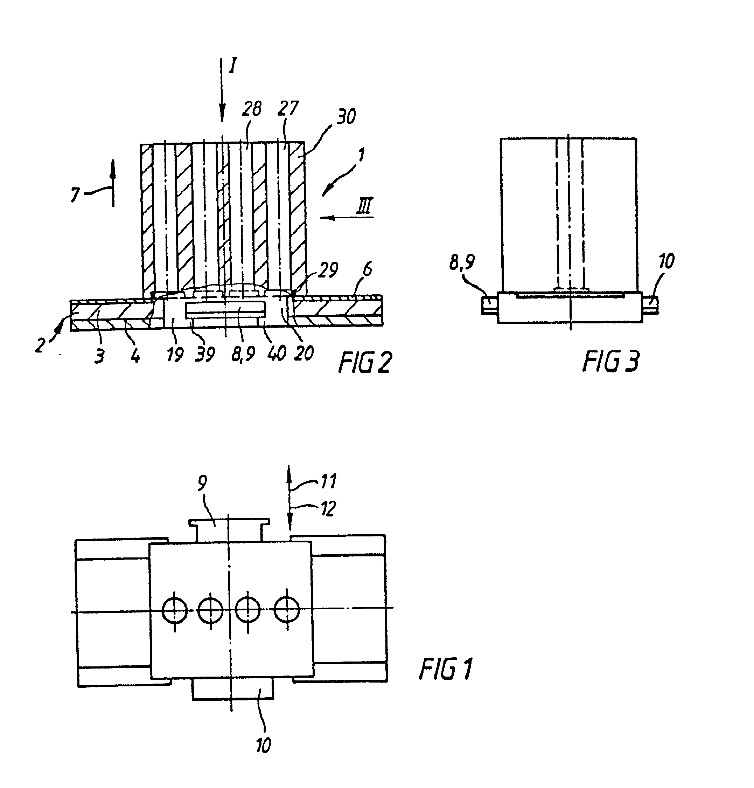

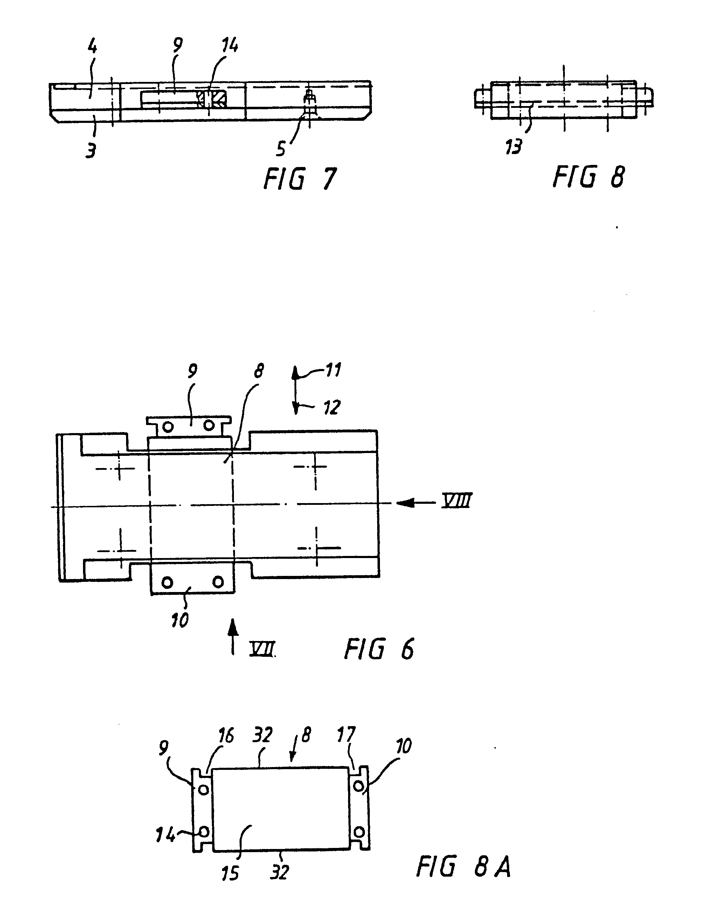

Die in den Fig. 1 bis 3 gezeigte Zentrifugationskammer 1 besteht aus einem Oberteil 30 und einer mit dieser lösbar verbundenen Trägerplatte 2. Die Trägerplatte 2 besteht aus zwei Teilplatten 3, 4, die über Schrauben 5 (vgl. Fig. 7) miteinander verbunden sind. An der Oberseite der Trägerplatte 2 ist der in Form eines rechteckigen Glastäfelchens ausgebildete Objektträger 6 angeordnet.

Das Oberteil 30 besteht aus einem durchsichtigen Kunststoffmaterial, in dem mehrere axiale und hohlzylindrische Probenkammern 27, 28 in Form von Bohrungen eingearbeitet sind. Zur bestimmungsgemässen Verwendung der Zentrifugationskammer 1 werden die Probenkammern 27, 28 mit einer Probenflüssigkeit gefüllt und die Zentrifugationskammer wird in eine Schleuderzentrifuge eingesetzt und dort zentrifugiert. Hierdurch wird die Probenflüssigkeit aufgetrennt und das Sedimentationsprodukt lagert sich aufgrund der in Längsrichtung der Probenkammern 27, 28 nach unten einwirkenden Zentrifugationskraft auf den zugeordneten Feldern des Objektträgers 6 ab.

Die Unterseite des Oberteils 30 liegt hierbei mit einem Dichtring 29 auf dem Objektträger 6 auf, damit während des Zentrifugationsvorgangs keine Flüssigkeit aus der Probenkammer 27, 28 ausfliessen kann.

Nach erfolgtem Zentrifugationsvorgang soll das Oberteil 30 von der Trägerplatte 2 getrennt werden, um den Objektträger 6 zu entnehmen und die aufsedimentierten Probenfelder auf dem Objektträger 6 einer weiteren Untersuchung zuzuführen.

Nach der Erfindung ist hierzu ein Schnellverschluss zwischen dem Oberteil 30 und der Trägerplatte 2 vorgesehen, der lediglich mit den Fingern einer Hand bedienbar ist. Er besteht aus einem Verschlussschieber 8 (vgl. Fig. 8a), der gemäss der Darstellung in Fig. 1 in den Pfeilrichtungen 11, 12 (d.h. in Längsrichtung) verschiebbar in einer Ausnehmung der Trägerplatte 2 gelagert ist. Im entriegelten Zustand kann das Oberteil 30 in Pfeilrichtung 7 von der Trägerplatte 2 abgehoben werden, und der darunterliegende Objektträger 6 kann von der Trägerplatte 2 entnommen werden.

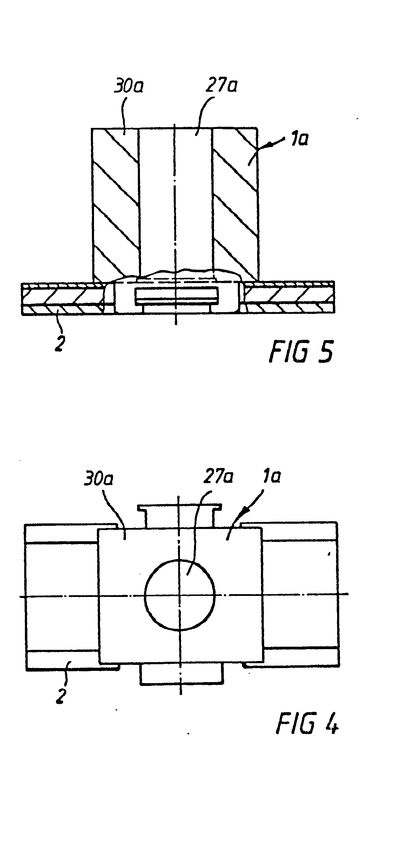

In den Fig. 4 und 5 ist gezeigt, dass eine Trägerplatte 2 auch mit beliebig anders geformten Oberteilen 30a kombiniert werden kann, so dass sich eine neue, anders gestaltete Zentrifugationskammer 1a ergibt.

Im Ausführungsbeispiel nach Fig. 4 und 5 weist das Oberteil 30a lediglich eine einzige Probenkammer 27a auf.

Der Verschlussschieber 8 weist gemäss Fig. 8a zwei seitliche Handhaben 9, 10 auf.

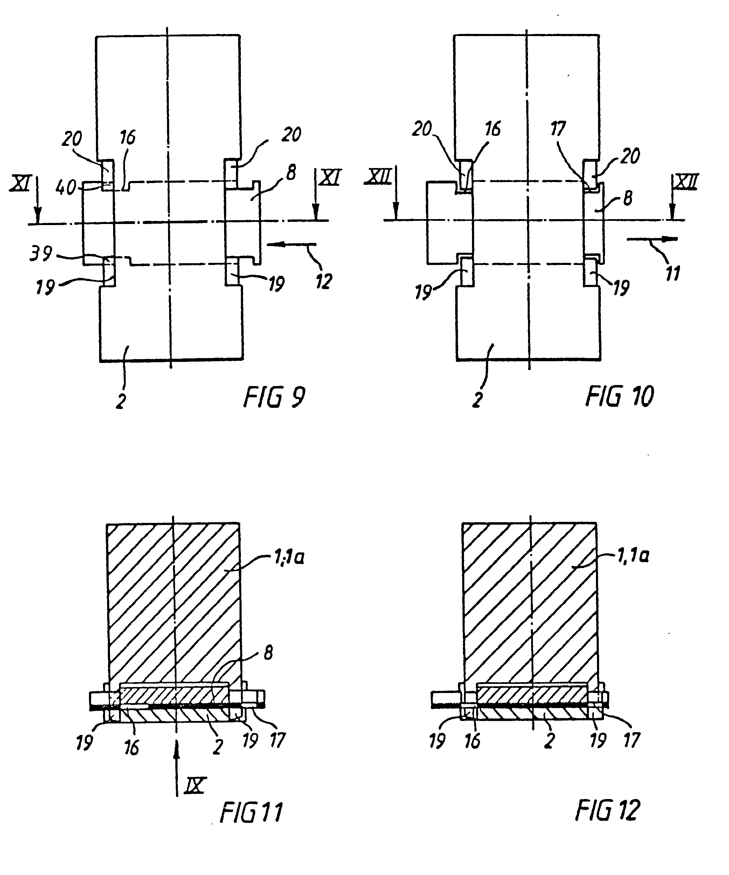

Wesentlich bei der vorliegenden Erfindung ist, dass die Zentrifugationskammer 1 zwischen die Finger einer Hand genommen werden kann, so dass beispielsweise gemäss Abbildung in Fig. 9 der Daumen der einen Hand auf der linken Seite der Trägerplatte liegt, während die übrigen Finger auf der rechten Seite der Trägerplatte den Verschlussschieber 8 in Pfeilrichtung 12 in Längsrichtung verschieben, so dass er seine entriegelte Stellung gemäss Fig. 10 einnimmt. Es kann nun mit der gleichen Hand das Oberteil 30 in Pfeilrichtung 7 von der Trägerplatte 2 entfernt werden. Ebenso erfolgt die Verbindung zwischen Oberteil 10 und Trägerplatte 2 dadurch, indem gemäss Fig. 10 der Verschlussschieber 8 in Pfeilrichtung 11 nach rechts bewegt wird, und hierdurch das Oberteil 30 fest mit der Trägerplatte 2 verbunden wird.

Die lösbare Verbindung zwischen Trägerplatte 2 und dem Oberteil 30 erfolgt nach dem ersten Ausführungsbeispiel gemäss den Fig. 1 bis 12 dadurch, dass an der Unterseite des Oberteils 30 Verschlusshaken 19, 20 angeordnet sind, die in ein unteres, abgewinkeltes Hakenende 39, 40 übergehen. Die Verschlusshaken 19, 20 greifen mit ihren Hakenenden 39, 40 unter den Verschlussschieber 8.

Im entriegelten Zustand gemäss Fig. 10 und 12 liegen die Hakenenden 39, 40 in den zugeordneten, etwas grösser ausgebildeten Verschlussausnehmungen 16, 17 (vgl. Fig. 8a) des Verschlussschiebers, was der entriegelten Stellung entspricht. Wird der Verschlussschieber in Pfeilrichtung 11 gemäss Fig. 10 und 12 nach rechts bewegt, dann gelangen die einwärts gebogenen Hakenenden 39, 40 auf die sich an die jeweiligen Verschlussausnehmungen 16, 17 anschliessenden Riegelstücke 32, 33 (vgl. Fig. 8a). Die Hakenenden 39, 40 liegen also unterhalb der Riegelstücke 32, 33 an und untergreifen diese Riegelstücke 32, 33, wodurch sich der in Fig. 9 und 11 gezeigte verriegelte Zustand ergibt. Fig. 7 zeigt, dass die Handhaben 9, 10 aus Kunststoff-Formteilen bestehen, die mittels Stiften 14 mit dem aus Metall bestehenden Mittelstück 15 des Verschlussschiebers 8 verbunden sind.

Die Fig. 8 zeigt die Nut 13, die in der Trägerplatte 2 zwischen den beiden Teilplatten 3, 4 ausgebildet ist. Durch die Aufteilung der Trägerplatte 2 in zwei parallel zueinanderliegenden Teilplatten 3, 4, die zwischen sich die Nut 13 ausbilden, wird die Konstruktion der Trägerplatte 2 wesentlich vereinfacht.

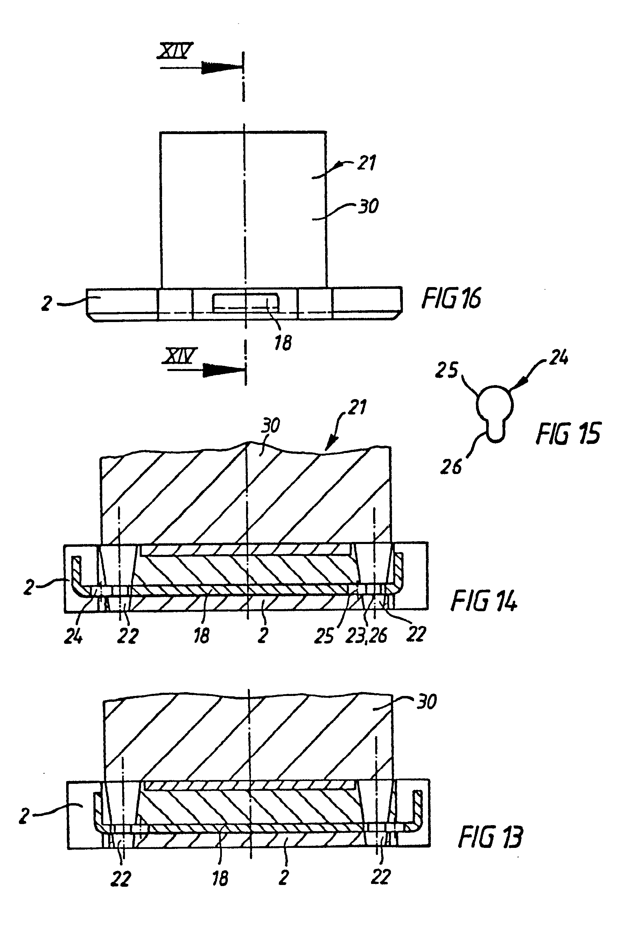

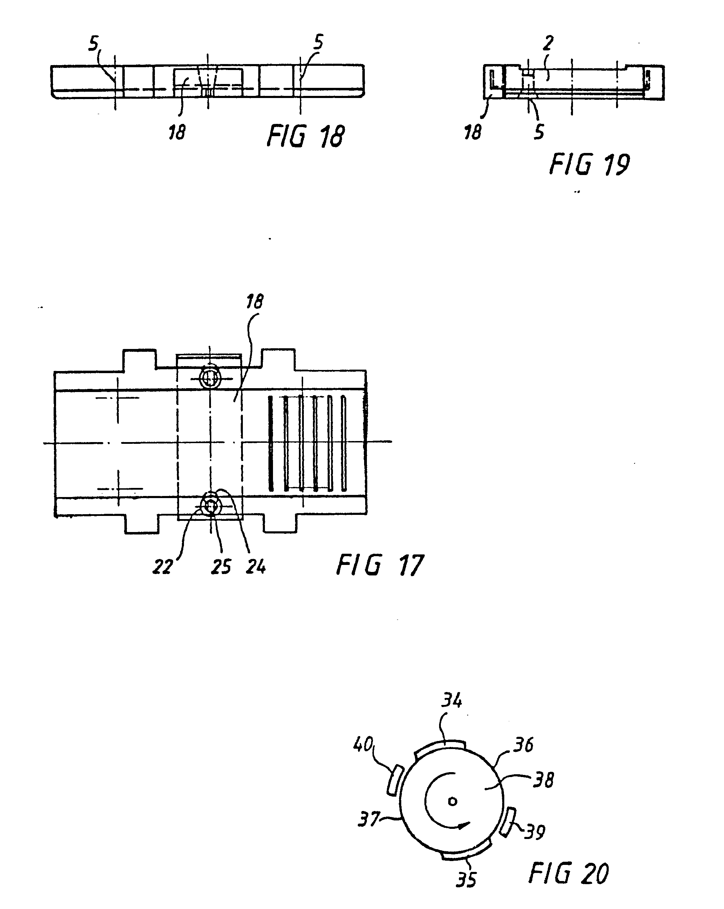

Das in den Fig. 13 bis 17 gezeigte zweite Ausführungsbeispiel bezieht sich darauf, dass gemäss Fig. 13, 14 und 16 an der Unterseite des Oberteils 30 Verschlussdorne 22 angeformt sind, die ein kegelstumpfförmiges Aussehen haben. In der Mantelfläche des Verschlussdornes 22 ist eine Ringnut 23 verringerten Durchmessers eingearbeitet. Die auf beiden Seiten des Verschlussschiebers 18 eingearbeiteten Verschlussausnehmungen 24 bestehen jeweils gemäss Fig. 15 aus einer Ausnehmung 25 grösseren Durchmessers und aus einer daran anschliessenden und in die grössere Ausnehmung 25 übergehenden kleineren Ausnehmung 26. Der Durchmesser der Ausnehmung 25 ist so gewählt, dass er etwas grösser ist als der maximale Aussendurchmesser des Verschlussdornes im Bereich dieses Verschlussschiebers 18.

Der Durchmesser 26 der Ausnehmung ist kleiner als der maximale Aussendurchmesser des Verschlussdornes 22, jedoch grösser als der Durchmesser der Ringnut 23 gewählt. Die Fig. 13 zeigt die entriegelte Stellung, aus der sichtbar ist, dass der Verschlussdorn 22 im Bereich der grösseren Ausnehmung 25 liegt, so dass das Oberteil 30 von der Trägerplatte 2 abziehbar ist. Die Zentrifugationskammer ist hierbei insgesamt mit 21 bezeichnet.

Die Fig. 14 zeigt die verriegelte Stellung, bei der erkennbar ist, dass die kleinere Ausnehmung 26 der Verschlussausnehmung 24 im Bereich der Ringnut 23 liegt, so dass das Oberteil 30 nicht mehr von der Trägerplatte 2 abziehbar ist.

Die Fig. 17 bis 19 zeigen die Unteransicht, Seitenansicht und Stirnansicht der Trägerplatte, wo gemäss Fig. 17 erkennbar ist, wie der Verschlussdorn 22 im Bereich der grösseren Ausnehmung 25 der Verschlussausnehmung 24 liegt.

Die Fig. 20 zeigt ein weiteres Ausführungsbeispiel, welches darstellt, dass für die Verriegelung zwischen dem Oberteil 30 und der Trägerplatte 2 nicht ein linear verschiebbarer Verschlussschieber 8, 18 verwendbar ist, sondern darüber hinaus ein drehbarer Verschlussschieber 38, der entweder — in einer ersten Ausführungsform insgesamt exzentrisch gelagert ist — oder — in der in Fig. 20 gezeigten Ausführungsform — zentrisch gelagert ist und an einem Aussenumfang Riegelstücke 34, 35 aufweist, die einen grösseren, radialen Abstand zum Drehpunkt haben als die sich daran anschliessenden Verschlussausnehmungen 36, 37. Das Oberteil 30 ist gemäss der erstbeschriebenen Ausführungsformen nach den Fig. 1 bis 13 wiederum mit Verschlusshaken 19, 20 versehen, an denen einwärts gebogene Hakenenden 39, 40 ansetzen, die auf den Drehpunkt des Verschlussschiebers 38 gerichtet sind. Durch Verdrehen des Verschlussschiebers 38 gelangen entweder die Riegelstücke 34, 35 in den Bereich der Hakenenden 39, 40, so dass die verriegelte Stellung eingenommen wird, während durch weitere Drehung die Hakenenden 39, 40 ausser Eingriff mit den Riegelstücken 34, 35 gelangen und in den Bereich der Verschlussausnehmungen 36, 37 kommen, so dass das Oberteil 30 von der Trägerplatte 2 abgezogen werden kann.

## Patentansprüche

1. Zentrifugationskammer zur Beschichtung von Objektträgern mit dem Sedimentationsprodukt einer Probenflüssigkeit während des Zentrifugationsvorgangs, bestehend aus einem Oberteil (30) mit einer oder mehreren darin angeordneten zylindrischen Probenkammern (27, 28) und einem abdichtend an der einen Stirnseite der Probenkammern (27, 28) anliegenden Objektträger (6), der auf einer planebenen Fläche einer Trägerplatte (2) gelagert ist, die lösbar mit dem Oberteil (30) verbunden ist, wobei die lösbare Verbindung zwischen dem Oberteil (30) der Zentrifugationskammer (1, 10, 21) und der den Objektträger (6) haltenden Trägerplatte (2) aus einem einhändig bedienbaren Verschlussschieber (8, 18, 38) mit Verschlussausnehmungen (16, 17; 24; 36, 37) besteht, der in Richtung seiner Längsachse verschiebbar oder drehbar in der Trägerplatte (2) gelagert ist und der mit zugeordneten, in die Verschlussausnehmungen (16, 17; 24) eingreifenden Verschlussteilen (19, 29; 22) des Oberteils (30) verbindbar ist.

2. Zentrifugationskammer nach Anspruch 1, dadurch gekennzeichnet, dass das Oberteil (30) mit an der Bodenfläche ansetzenden, den Verschlussschieber (8) mindestens teilweise mit abgewinkelten Hakenenden (39, 40) an der Unterseite untergreifenden Verschlusshaken (19, 20) verbunden ist, die im Öffnungszustand in die zugeordneten Verschlussausnehmungen (16, 17) in den Längskanten des Verschlussschiebers (8) eingreifen und die im Schliesszustand den Verschlussschieber (8) untergreifen.

3. Zentrifugationskammer nach Anspruch 1, dadurch gekennzeichnet, dass das Oberteil (30) mit an der Bodenfläche ansetzenden, axialen Verschlussdornen (22) verbunden ist, welche jeweils eine Ringnut (23) verringerten Durchmessers aufweisen, der jeweils eine schlüssellochförmige Verschlussausnehmung (24) im Verschlussschieber (18) zugeordnet ist, dass im Öffnungszustand der Verschlussdorn (22) in die Ausnehmung (25) grösseren Durchmessers der Verschlussausnehmung (24) und dass im Schliesszustand die Ringnut (23) in die Ausnehmung kleineren Durchmessers der Verschlussausnehmung (24) eingreift.

4. Zentrifugationskammer nach Anspruch 1, dadurch gekennzeichnet, dass der drehbar gelagerte Verschlussschieber (38) mit exzentrischem Aussenumfang versehen ist, der mit seinen am Aussenumfang angeordneten Verschlussausnehmungen (36, 37) mit zugeordneten Teilen des Oberteils der Zentrifugationskammer (1, 10, 21) verriegelbar ist.

5. Zentrifugationskammer nach einem der Ansprüche 1 bis 4, dadurch gekennzeichnet, dass der Verschlussschieber (8, 18, 38) im Öffnungszustand weit über die Aussenabmessungen der Trägerplatte mindestens auf einer Seite hinausragt.

### Claims

1. Centrifugal chamber for forming a layer with the sediment product of a liquid sample on an object carrier during centrifuging, comprising an upper part (30) with one or more cylindrical sample chambers (27, 28) arranged therein and an object carrier (6) sealingly adjoining one front side of the sample chambers (27, 28) and supported by a plane surface of a carrier plate (2) which is detachable connected to the upper part (30), wherein the detachable connection between the upper part (30) of the centrifugal chamber (1, 10, 21) and the carrier plate (2) supporting the object carrier (6) consist of an one-handed manipulable locking slide (8, 18, 38) with locking recesses (16, 17; 24; 36, 37) which is movable along its lonngitudinal axis or revolving supported on the carrier plate (2), and which is provided to be connected with associated said locking recesses (16, 17; 24) engaging locking parts (19, 20; 22) of the upper part (30).

2. Centrifugal chamber according to claim 1, characterized in that the upper part (30) in a manner connected to and initiating on its bottom surface include with offset hook-like ends (39, 40) the locking slider unterneath at least partly grasping locking hooks (19, 20) which in the open position are disengaged opposite associated along the longitudinal edges of the locking slider (8) provided recesses (16, 17) and which in the locking position grasp underneath the locking slider (8).

3. Centrifugal chamber according to claim 1, characterized in that the upper part (30) in a manner connected to and initiating on its bottom surface include axial locking pins (22), each one provided with a ring-like groove (23) of reduced diameter and each associated to a keyhole-like locking aperture (24) provided in the locking slider (18), that in the open position the locking pin (22) occupy a part (25) of the locking aperture (24) having a larger diameter, and, that in the locking position the ring-like groove (23) engage the part of the locking aperture (24) having a smaller diameter.

4. Centrifugal chamber according to claim 1, characterized in that the revolving supported locking slider (38) is provided with an eccentric circumference which by means of around the circumference arranged locking recesses (36, 37) is engageable with associated parts of the upper part of the centrifugal chamber (1, 10, 21).

5. Centrifugal chamber according to one of claims 1 through 4, characterized in that the locking slider (8, 18, 38) in its open position project from the carrier plate at least at one side exceeding the outer dimensions of the plate substantially.

### Revendications

1. Enceinte de centrifugation pour l'enduction de porte-objets avec le produit de sédimentation d'un liquide éprouvette pendant le processus de centrifugation, qui comporte une partie supérieure (30) pourvue d'une ou plusieurs chambres d'essai cylindriques (27, 28) disposées à l'intérieur de celle-ci et un porte-objet (6) qui s'applique de manière étanche contre l'une des faces frontales des chambres d'essai (27, 28) et qui est montée sur une surface plane d'une plaque support (2) assemblée der manière amovible à la partie supérieur (30), et dans laquelle l'assemblage amovible entre la partie supérieure (30) de l'enceinte de centrifugation (1, 10, 21) et la plaque support (2) soutenant le porte-objet (6) se fait au moyen d'une barre de verrouillage (8, 18, 38) manoeuvrable d'une seule main et pourvue de creux de verrouillage (16, 17; 24; 36, 37), cette barre étant montée à pivotement ou à coulissement dans la direction de son axe longitudinal dans la plaque support (2) et pouvant être reliée à des éléments de verrouillage (19, 20; 22) correspondants de la partie supérieure (30) qui s'encliquetent dans les creux de verrouillage (16, 17; 24).

3. Enceinte de centrifugation selon la revendication 1, caractérisée en ce que la partie supérieure (30) est reliée à des crochets de verrouillage (19, 20) disposés sur la surface inférieure et agrippant par en dessous, au moins en partie, la barre de verrouillage (8), au niveau de sa face inférieure, à l'aide d'extrémités de crochets (39, 40) coudées, ces crochets s'encliquetant en position d'ouverture dans les creux de verrouillage associés (16, 17) ménagés dans les arêtes longidutinales de la barre de verrouillage (8) et agrippant par en dessous, en position de fermeture, la barre de verrouillage.

3. Enceinte de centrifugation selon la revendication 1, caractérisée en ce que la partie supérieure (30) est reliée à des broches de verrouillage axiales (22), disposées sur la surface inférieure, et qui possèdent chacune une rainure annulaire (23) de diamètre réduit, à laquelle est associé un creux de verrouillage respectif (24) en forme de trou de serrure, ménagé dans la barre de verrouillage (18), en ce que, dans la position d'ouverture, la broche de verrouillage (22) s'encliquète dans le renfoncement (25) de plus grand diamètre du creux de verrouillage (24) et en ce que, dans la position de fermeture, la rainure annulaire (23) s'encliquète dans le renfoncement de plus petit diamètre du creux de verrouillage (24).

4. Enceinte de centrifugation selon la revendication 1, caractérisée en ce que la barre de verrouillage (38), montée en rotation, est pourvue d'un pourtour extérieur excentré et peut se verrouiller sur la zone associée de la partie supérieure de la chambre de centrifugation (1, 10, 21) par ses creux de verrouillage (36, 37) formés sur le pourtour extérieur.

5. Enceinte de centrifugation selon l'une des revendications 1 à 4, caractérisée en ce que, dans la position d'ouverture, la barre de verrouillage (8, 18, 38) fait saillie, au moins d'un côté, bien au-delà du profil extérieur de la plaque support.

FIG 2

FIG 3

FIG 1

FIG 5

FIG 4

FIG 7

FIG 8

FIG 6

FIG 8 A

FIG 9

FIG 10

FIG 11

FIG 12

XIV

2 —

FIG 16

18

XIV

25 — 24

FIG 15

26

30

21

FIG 14

2 —

24   22   18   2   25   23,26   22

30

FIG 13

2 —

22   18   2   22

5          5

18          FIG 18

2

18          5          FIG 19

18

22    25    24          FIG 17

34

40          36

38

37

39

35          FIG 20